# EUROPEAN PATENT APPLICATION

(11) **EP 4 836 420 A1**
(43) Date of publication of application: **04.11.2026**
(21) Application number: 24910170.0
(22) Date of filing: 16.10.2024
(51) Int. Cl.: H04N 21/2187

(54) **PAGE INTERACTION METHOD AND APPARATUS, AND DEVICE AND STORAGE MEDIUM**

(30) Priority: 29.12.2023 CN 202311862807
(71) Applicant: Beijing Zitiao Network Technology Co., Ltd., Beijing 100190 (CN)
(72) Inventor: LI, JiangLei, Beijing 100028 (CN); GUAN, Sainan, Beijing 100028 (CN); GONG, Xinyuan, Beijing 100028 (CN)
(74) Representative: Grünecker Patent- und Rechtsanwälte PartG mbB
(86) International application number: PCT/CN2024/125364
(87) International publication number: WO 2025/139228

(57) **Abstract**

The disclosure provides a method, an apparatus, a device and a storage medium for page interaction. The method includes: when a target interaction operation triggered for a target interaction object on a live streaming room page is received, determining whether a resource amount corresponding to the target interaction object is greater than a remaining resource amount of current account; and if it is greater, displaying a resource interaction window on the live streaming room page; in response to a resource interaction success message, determining whether an corresponding interaction resource amount is less than a target resource amount; and if it is not less, presenting an interaction effect resource corresponding to the target interaction object and displaying a first predetermined prompt information on the live streaming room page. The disclosure supports a continuous execution of target interaction operations triggered for a target interaction object after a successful resource interaction in the live streaming room. The interaction path for an interaction object in the live streaming room is optimized, and the live streaming related functions are enriched, therefore improving the interaction experience of the user in the live streaming room.

## Description

This application claims the priority of Chinese Patent Application No. 202311862807.1, entitled "METHOD, APPARATUS, DEVICE, AND STORAGE MEDIUM FOR PAGE INTERACTION," filed on Dec. 29, 2023, the entire content of which is incorporated herein by reference.

### FIELD

The present disclosure relates to the field of data processing, and in particular to a method, an apparatus, a device and a storage medium for page interaction.

### BACKGROUND

With the continuous development of the live streaming technology, users' demands for live streaming related functions have become increasingly diversified. For example, during a live streaming, viewers have increasingly higher requirements for the interaction manners that the live streaming room page can support.

Therefore, how to meet the increasing diversified live streaming related requirements of users and improve the user's interaction experience in a live streaming room has become a technical problem to be solved urgently.

### SUMMARY

To solve the above technical problems, the embodiments of the present disclosure provide a method, an apparatus, a device, and a storage medium for page interaction.

According to a first aspect, the present disclosure provides a method for page interaction, including:
displaying a resource interaction window on a live streaming room page in response to a target interaction operation triggered for a target interaction object on the live streaming room page and in accordance with a determination that a resource amount corresponding to the target interaction object is greater than a resource amount of a current account;
presenting an interaction effect resource corresponding to the target interaction object and displaying a first predetermined prompt information on the live streaming room page in response to a resource interaction success message triggered based on the resource interaction window and in accordance with a determination that an interaction resource amount corresponding to the resource interaction success message is not less than a target resource amount, where the target resource amount is determined based on the resource amount of the current account and the resource amount corresponding to the target interaction object, the first predetermined prompt information is configured to prompt that the target interaction operation triggered for the target interaction object is successfully executed.

In an optional implementation, the method further includes:
displaying an interaction object panel on the live streaming room page in response to the resource interaction success message triggered based on the resource interaction window and in accordance with the determination that the interaction resource amount corresponding to the resource interaction success message is less than the target resource amount, where the interaction object panel is configured to support triggering the target interaction operation for an interaction object.

In an optional implementation, target indication information is displayed on the resource interaction window, and presenting the interaction effect resource corresponding to the target interaction object and displaying the first predetermined prompt information on the live streaming room page in response to the resource interaction success message triggered based on the resource interaction window and in accordance with the determination that the interaction resource amount corresponding to the resource interaction success message is not less than the target resource amount includes:
presenting the interaction effect resource corresponding to the target interaction object and displaying the first predetermined prompt information on the live streaming room page in response to the resource interaction success message triggered based on the resource interaction window and in accordance with the determination that the interaction resource amount corresponding to the resource interaction success message is not less than the target resource amount and in accordance with a determination that the target indication information indicates an automatic execution of the target interaction operation after a successful interaction.

In an optional implementation, the method further includes:
displaying an interaction object panel on the live streaming room page in response to the resource interaction success message triggered based on the resource interaction window and in accordance with the determination that the target indication information indicates that the target interaction operation will not be automatically executed after the successful interaction; where the interaction object panel is configured to support triggering the target interaction operation for an interaction object.

In an optional implementation, a plurality of resource levels is presented on the resource interaction window, the method further includes: after displaying the resource interaction window on the live streaming room page:
displaying, on the resource interaction window, a first target resource level that is selected in the plurality of resource levels by default; where a resource amount corresponding to the first target resource level is not less than the target resource amount;
determining, in response to the resource interaction success message triggered based on the resource interaction window, the resource amount corresponding to the first target resource level as the interaction resource amount corresponding to the resource interaction success message.

In an optional implementation, a plurality of resource levels is presented on the resource interaction window, the method further includes: after displaying the resource interaction window on the live streaming room page:
receiving a selection operation for a second target resource level of the plurality of resource levels;
determining, in response to the resource interaction success message triggered based on the resource interaction window, a resource amount corresponding to the second target resource level as the interaction resource amount corresponding to the resource interaction success message.

In an optional implementation, the method further includes: after receiving the selection operation for the second target resource level of the plurality of resource levels:
displaying, in accordance with a determination that the resource amount corresponding to the second target resource level is less than the target resource amount, a second predetermined prompt information on the resource interaction window, where the second predetermined prompt information is configured to prompt that the target interaction operation is unable to be executed automatically for the target interaction object.

In an optional implementation, the method further includes: after displaying the resource interaction window on the live streaming room page:
closing the resource interaction window and displaying an interaction object panel on the live streaming room page in response to a closing trigger operation for the resource interaction window; where the interaction object panel is configured to support triggering the target interaction operation for an interaction object

According to a second aspect, the present disclosure further provides an apparatus for page interaction, including:
a first display module, configured to display a resource interaction window on a live streaming room page in response to a target interaction operation triggered for a target interaction object on the live streaming room page and in accordance with a determination that a resource amount corresponding to the target interaction object is greater than a resource amount corresponding to a current account;
a second display module, configured to present an interaction effect resource corresponding to the target interaction object and displaying a first predetermined prompt information on the live streaming room page in response to a resource interaction success message triggered based on the resource interaction window and in accordance with a determination that an interaction resource amount corresponding to the resource interaction success message is not less than a target resource amount; where the target resource amount is determined based on the resource amount corresponding to the current account and the resource amount corresponding to the target interaction object, the first predetermined prompt information is configured to prompt that the target interaction operation for the target interaction object is successfully executed.

According to a third aspect, the present disclosure provides a computer-readable storage medium. The computer-readable storage medium has stored thereon instructions that, when executed on a terminal device, cause the terminal device to implement the above method.

According to a fourth aspect, the present disclosure provides a device for page interaction. The device for page interaction includes: a memory, a processor, and a computer program stored on the memory and executable on the processor, when executed by the processor, implementing the above method.

According to a fifth aspect, the present disclosure provides a computer program product. The computer program product includes computer programs/instructions that, when executed by a processor, implement the method described above.

### BRIEF DESCRIPTION OF DRAWINGS

The drawings herein are incorporated in and constitute a part of the description, illustrating embodiments consistent with the present disclosure and, together with the description, serve to explain the principles of the present disclosure.

In order to more clearly illustrate the embodiments of the present disclosure or the technical solutions in the prior art, the accompanying drawings need to be used in the description of the embodiments or the prior art will be briefly introduced below. It will be apparent that those skilled in the art may obtain other drawings according to these drawings without creative labor.
FIG. 1 is a flowchart of a method for page interaction provided by an embodiment of the present disclosure;
FIG. 2 is a schematic diagram of a live streaming room page provided by an embodiment of the present disclosure;
FIG. 3 is a schematic diagram of another live streaming room page provided by an embodiment of the present disclosure;
FIG. 4 is a schematic diagram of still another live streaming room page provided by an embodiment of the present disclosure;
FIG. 5 is a schematic diagram of another live streaming room page provided by an embodiment of the present disclosure;
FIG. 6 is a schematic diagram of another live streaming room page provided by an embodiment of the present disclosure;
FIG. 7 is a schematic diagram of another live streaming room page provided by an embodiment of the present disclosure;
FIG. 8 is a schematic structural diagram of an apparatus for page interaction provided by an embodiment of the present disclosure;
FIG. 9 is a schematic structural diagram of a device for page interaction provided by an embodiment of the present disclosure.

### DETAILED DESCRIPTION

In order to be able to more clearly understand the above objects, features and advantages of the present disclosure, the solutions of the present disclosure will be further described below. It should be noted that, in the case of no conflict, the features in the embodiments and embodiments of the present disclosure may be combined with each other.

Many specific details are set forth in the following description to facilitate a thorough understanding of the present disclosure, but the present disclosure may also be implemented in other ways other than those described herein; it is apparent that the embodiments in the specification are only part of the embodiments of the present disclosure, not all embodiments.

At present, in the live streaming process, viewers have increasingly higher requirements for the interaction manners that the live streaming room page can support. In an application scenario, the user can send an interaction object, such as a gift, in the live streaming room based on the resource. Once the remaining resource amount of the current account is insufficient, recharging the resource is needed. However, the current resource recharge link and the gift sending link are independent of each other. That is, after the resource recharge is successful, the user needs to further manually locate the entry of gift sending to continue to send the gift. Obviously, the above processing manner affects the interaction experience of the user in the live streaming room.

Therefore, the embodiments of the present disclosure provide a method for page interaction. Specifically, when a target interaction operation triggered for a target interaction object on a live streaming room page is received, whether a resource amount corresponding to the target interaction object is greater than a remaining resource amount of a current account is determined, and if the resource amount corresponding to the target interaction object is greater than the remaining resource amount of the current account, a resource interaction window is displayed on the live streaming room page. In response to a resource interaction success message triggered based on the resource interaction window, whether an interaction resource amount corresponding to the resource interaction success message is less than a target resource amount is determined, if the interaction resource amount corresponding to the resource interaction success message is not less than the target resource amount, an interaction effect resource corresponding to the target interaction object is presented and a first predetermined prompt information is displayed on the live streaming room page, to prompt the user that the target interaction operation triggered for the target interaction object is successfully executed.

In the embodiments of the present disclosure, in the case where the target interaction operation triggered for the target interaction object on the live streaming room page is received and the remaining resource amount of the current account is insufficient, continuous execution of target interaction operations triggered for the target interaction object after a successful resource interaction is supported. The interaction path for an interaction object in the live streaming room is optimized, and the live streaming related functions are enriched, therefore improving the interaction experience of the user in the live streaming room.

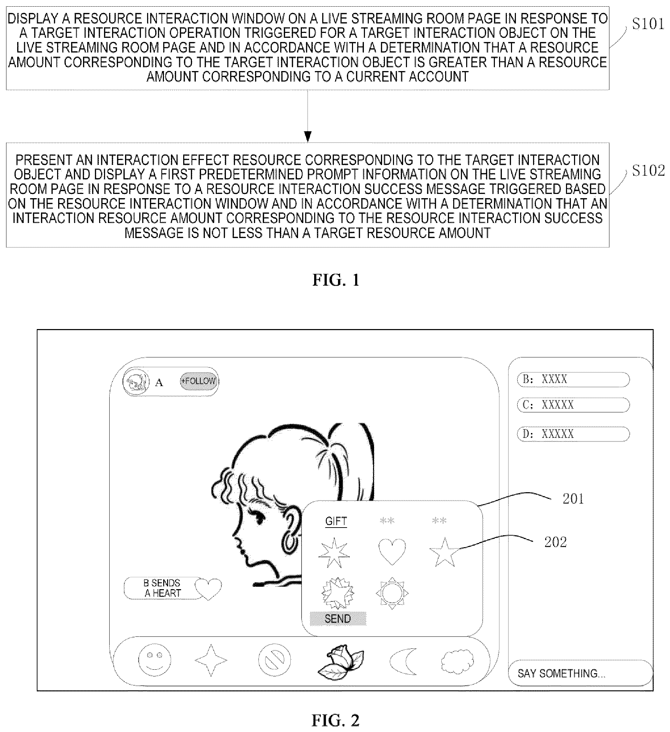

Specifically, the embodiments of the present disclosure provide a method for page interaction. With reference to FIG. 1, FIG. 1 is a flowchart of a method for page interaction provided by an embodiment of the present disclosure, specifically including:
S101: a resource interaction window is displayed on a live streaming room page in response to a target interaction operation triggered for a target interaction object on the live streaming room page and in accordance with a determination that a resource amount corresponding to the target interaction object is greater than a resource amount corresponding to a current account.

The method for page interaction provided by the embodiments of the present disclosure may be applied to a client. Specifically, the client may be deployed on a terminal such as a smart phone, a tablet computer, a desktop computer, or the like.

In the embodiments of the present disclosure, one or more interaction objects may be presented on the live streaming room page. The target interaction object may be any selected interaction object in the one or more interaction objects. As shown in FIG. 2, FIG. 2 is a schematic diagram of a live streaming room page provided by an embodiment of the present disclosure, where an interaction object panel 201 is displayed on the live streaming room page. One or more interaction objects are presented on the interaction object panel, including a target interaction object 202.

The interaction object may include a virtual gift, a streamer's fan club, a target audio and video resource, and the like. The target interaction operation triggered for the target interaction object may include a gift sending operation triggered for a virtual gift, a join operation triggered for the streamer's fan club, a resume playback operation triggered for the target audio and video resource, and the like.

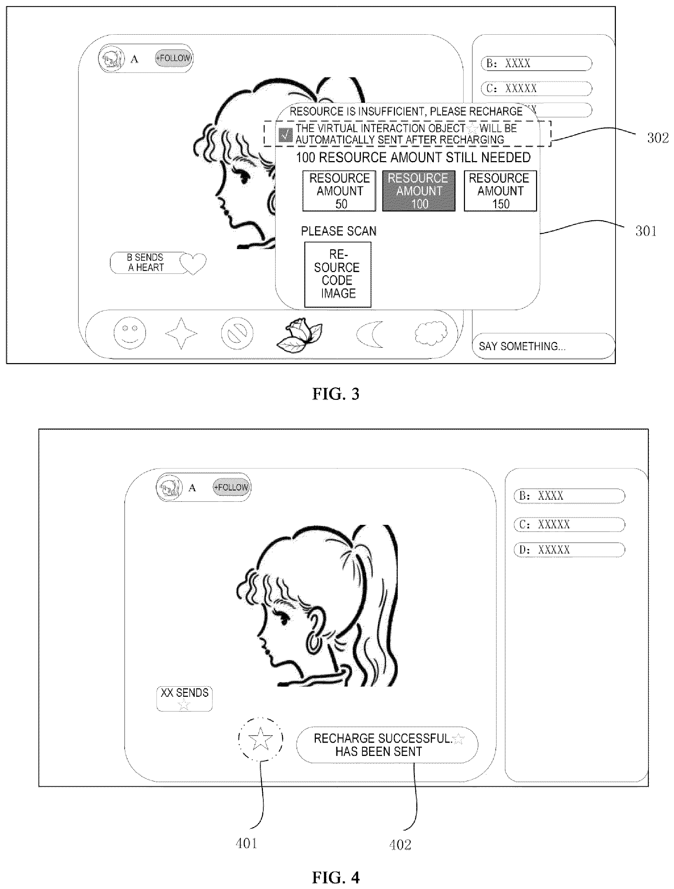

In practical applications, when an interaction operation triggered for the target interaction object on the live streaming room page is received, whether the resource amount corresponding to the target interaction object is greater than the remaining resource amount of the current account is firstly determined. If the resource amount corresponding to the target interaction object is greater than the remaining resource amount of the current account, it indicates that the remaining resource amount of the current account is insufficient. At this time, a resource interaction needs to be performed for the target resource, specifically including an interaction of a resource recharge type. Therefore, the resource interaction window is automatically displayed on the live streaming room page. Referring to FIG. 3, FIG. 3 is a schematic diagram of another live streaming room page provided by an embodiment of the present disclosure, where a resource interaction window 301 is displayed on a live streaming room page, which is configured to support an interaction operation for a target resource. For example, the resource interaction window may be a resource recharge window for supporting resource recharge. It should be noted that, in the case where the remaining resource amount of the current account is insufficient, the resource interaction window for increasing the resource amount of the current account may be displayed, so that the user can trigger an interaction operation that increases the resource amount of the current account based on the resource interaction window.

If the resource amount corresponding to the target interaction object is not greater than the remaining resource amount of the current account, it indicates that the remaining resource amount of the current account is sufficient, and the target interaction operation may be executed for the target interaction object without triggering the resource recharge. At this time, the target interaction operation for the target interaction object on the live streaming room page is executed.

S102: an interaction effect resource corresponding to the target interaction object is presented and first predetermined prompt information is displayed on the live streaming room page in response to a resource interaction success message triggered based on the resource interaction window and in accordance with a determination that the interaction resource amount corresponding to the resource interaction success message is not less than the target resource amount.

Here, the target resource amount is determined based on the remaining resource amount of the current account and the resource amount corresponding to the target interaction object. The first predetermined prompt information is configured to prompt that the target interaction operation triggered for the target interaction object is successfully executed.

In the embodiments of the present disclosure, the user may trigger a corresponding resource interaction operation based on the resource interaction window displayed on the live streaming room page. Specifically, the resource interaction operation may include a resource recharging operation, for example, a series of operations such as, an operation of determining resource amount of recharging, a payment operation, and the like.

In actual applications, when the resource interaction success message triggered for the resource interaction window is received, whether the interaction resource amount corresponding to the resource interaction success message is less than the target resource amount is determined firstly. Here, the target resource amount is determined based on the remaining resource amount of the current account and the resource amount corresponding to the target interaction object. Specifically, the target resource amount may be a difference value obtained by subtracting the remaining resource amount of the current account from a resource amount corresponding to a target interaction object

The interaction effect resource corresponding to the target interaction object is presented and the first predetermined prompt information is displayed on the live streaming room page in accordance with the determination that the interaction resource amount is not less than the target resource amount, to prompt the user that the target interaction operation triggered for the target interaction object is successfully executed. In addition, prompt information of a successful interaction, such as prompt information of a successful recharge, may also be displayed on the live streaming room page.

The interaction effect resource corresponding to the target interaction object in the embodiments of the present disclosure may include a presentation effect animation corresponding to a gift, a fan club panel corresponding to a streamer's fan club, a resume playback success page corresponding to a target audio and video resource, and the like. As shown in FIG. 4, FIG. 4 is a schematic diagram of still another live streaming room page provided by an embodiment of the present disclosure, where an interaction effect resource 401 corresponding to the target interaction object is presented and a first predetermined prompt information 402 is displayed on the live streaming room page.

In an optional implementation, in order to prompt the user that the target interaction operation triggered for the target interaction object will be executed automatically after the successful resource interaction, prompt information configured to reflect "the target interaction operation triggered for the target interaction object will be executed automatically after the successful resource interaction" may be displayed on the resource interaction window, to improve the interaction experience of the user in the live streaming room.

In an optional implementation, on the basis of the content described above, in accordance with a determination that the interaction resource amount corresponding to the resource interaction success message is less than the target resource amount, it indicates that the interaction resource amount for this time is insufficient to execute the target interaction operation for the target interaction object, for example, the interaction resource amount for this time is insufficient to send the target gift. In order to facilitate the user to continue to trigger target interaction operations for other interaction objects on the live streaming room page, the embodiments of the present disclosure may hide the resource interaction window in the case where the interaction resource amount is less than the target resource amount, and display an interaction object panel on the live streaming room page, as shown in FIG. 2, so that the user can continue to trigger the target interaction operation for the interaction object based on the interaction object panel directly, without manually evoking the interaction object panel, thereby optimizing the interaction path for the interaction object. In addition, prompt information of the successful interaction may also be displayed on the live streaming room page shown in FIG. 2, and the user may be prompted that target interaction operations for other interaction objects on the interaction object panel may be triggered.

In another optional implementation, if a close operation for the resource interaction window is received, the resource interaction window will be closed on the live streaming room page, and the interaction object panel will be reserved on the live streaming room page, so that the user can trigger target interaction operations for other interaction objects based on the interaction object panel directly, thereby improving the interaction convenience of the user for the interaction object.

In the method for page interaction provided by the embodiments of the present disclosure, when the target interaction operation triggered for the target interaction object on the live streaming room page is received, whether the resource amount corresponding to the target interaction object is greater than the remaining resource amount of the current account is determined, and if the resource amount corresponding to the target interaction object is greater than the remaining resource amount of the current account, the resource interaction window is displayed on the live streaming room page. In response to the resource interaction success message triggered based on the resource interaction window, whether the interaction resource amount corresponding to the resource interaction success message is less than the target resource amount is determined. If the interaction resource amount corresponding to the resource interaction success message is not less than the target resource amount, an interaction effect resource corresponding to the target interaction object is presented and the first predetermined prompt information is displayed on the live streaming room page, to prompt the user that the target interaction operation triggered for the target interaction object is successfully executed.

In the embodiments of the present disclosure, in the case where the target interaction operation triggered for the target interaction object on the live streaming room page is received and the remaining resource amount of the current account is insufficient, continuous execution of target interaction operations triggered for the target interaction object after the successful resource interaction is supported. The interaction path for the interaction object in the live streaming room is optimized, and the live streaming related functions are enriched, therefore improving the interaction experience of the user in the live streaming room.

On the basis of the content described above, in order to further enrich the interaction function in the live streaming room, a target indication information may be displayed on the resource interaction window, to indicate whether the target interaction operation for the target interaction object is automatically executed after the successful interaction.

In an optional implementation, if the resource interaction success message triggered based on the resource interaction window is received and it is determined that the interaction resource amount corresponding to the resource interaction success message is not less than the target resource amount, it is further necessary to determine whether the target indication information on the resource interaction window indicates an automatic execution of the above target interaction operation after the successful interaction. If it is determined that the target indication information indicates that the target interaction operation will be executed automatically after the successful interaction, the interaction effect resource corresponding to the target interaction object is presented and the first predetermined prompt information is displayed on the live streaming room page, to prompt the user that the target interaction operation triggered for the target interaction object is successfully executed. As shown in FIG. 3, the target indication information 302 of "whether the target interaction operation triggered for the target interaction object will be automatically executed after the successful interaction" is displayed on the resource interaction window 301.

Here, target indication information displayed on the resource interaction window may be indication information selected by default by the system, or may be indication information actively selected by the user. The target indication information may not only indicate whether the target interaction operation triggered for the target interaction object will be automatically executed after the successful interaction, but may also be used to prompt the user that the target interaction operation triggered for the target interaction object will be automatically executed after the successful interaction. It allows users to have an expectation for the target interaction operation that will be automatically executed subsequently, thereby ensuring the users' interaction experience in the live streaming room.

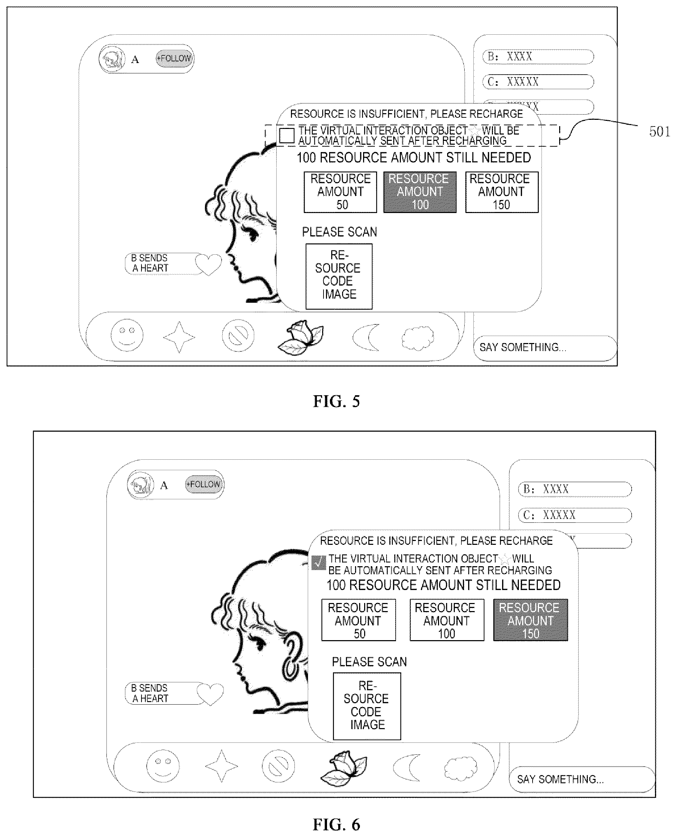

In another optional implementation, the user may set the target indication information on the resource interaction window to "the above target interaction operation will not be automatically executed after the successful interaction". As shown in FIG. 3, the user can set "the above target interaction operation will not be automatically executed after the successful interaction" by unchecking the target indication information 302, then the state of the target indication information 302 displayed on the resource interaction window switches to the state of target indication information 501 shown in FIG. 5. If the resource interaction success message triggered based on the resource interaction window is received and it is determined that the target indication information on the resource interaction window indicates that the above target interaction operation will not be automatically executed after the successful interaction, it indicates that the user does not want the above target interaction operation to be automatically executed after the successful interaction. For this, the interaction object panel may be displayed on the live streaming room page after the successful interaction. That is, the above display state of FIG. 5 is switched to the above display state of FIG. 2, so that the user can select an interaction object based on the interaction object panel to trigger a target interaction operation.

In addition, a plurality of resource levels may be presented on the resource interaction window in the embodiments of the present disclosure, for example, three resource levels as shown in FIG. 3. A first target resource level of the plurality of resource levels, for example, resource amount 100 as shown in FIG. 3, may be selected by default on the resource interaction window, where a resource amount corresponding to the first target resource level is determined based on the target resource amount. Specifically, the resource amount corresponding to the first target resource level is not less than the target resource amount.

In an optional implementation, the user may trigger a switching operation for resource levels on the resource interaction window to adjust an interaction resource amount. As shown in FIG. 6, FIG. 6 is a schematic diagram of another live streaming room page provided by an embodiment of the present disclosure, where the resource level on the interaction object panel is switched from the above resource amount 100 shown in Fig. 3 to resource amount 150 by the user. Specifically, a selection operation for a second target resource level of the plurality of resource levels is received, where the second target resource level may be resource amount 150 as shown in FIG. 6.

In an actual application, when a resource interaction success message triggered based on the resource interaction window is received, a resource amount corresponding to the resource level selected on the resource interaction window is determined as an interaction resource amount corresponding to the resource interaction success message. Then whether the interaction resource amount is less than the target resource amount is determined. Therefore, whether an interaction effect resource corresponding to the target interaction object is presented and the first predetermined prompt information is displayed on the live streaming room page is determined.

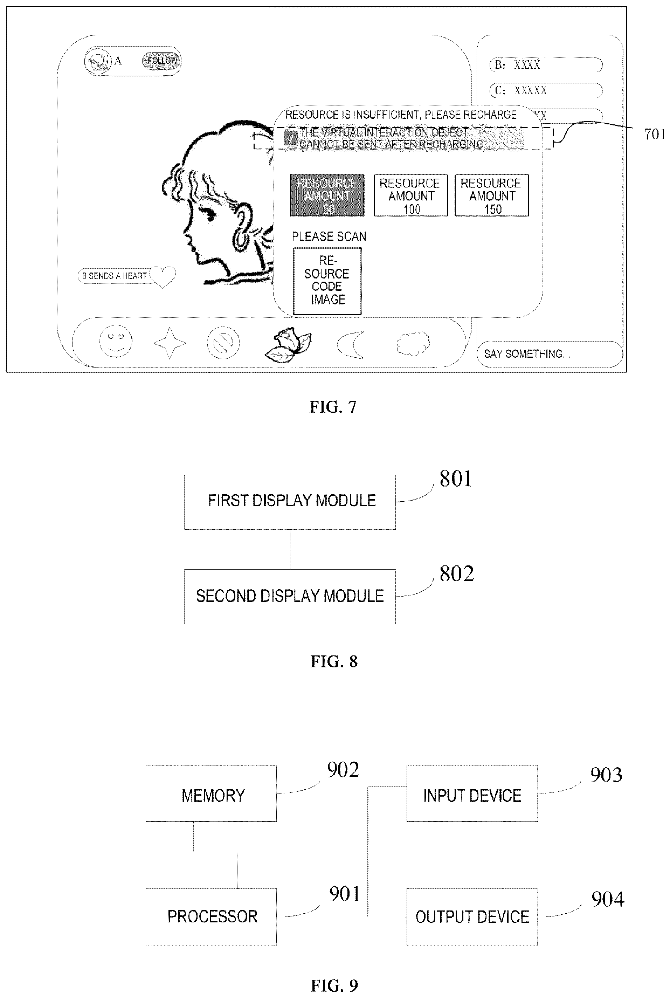

In an optional implementation, in accordance with a determination that the interaction resource amount corresponding to the second target resource level selected by the user is less than the target resource amount, it indicates that the interaction resource amount for this time is insufficient to execute the target interaction operation for the target interaction object. For this, a second prompt information is displayed on the resource interaction window to prompt the user that the target interaction operation is unable to be executed automatically for the target interaction object. As shown in FIG. 7, FIG. 7 is a schematic diagram of another live streaming room page provided by an embodiment of the present disclosure, where the second predetermined prompt information 701 is displayed on the resource interaction window, and is configured to prompt the user that the interaction resource amount for this time is insufficient to execute the target interaction operation for the target interaction object .

In an optional implementation, if the resource interaction success message triggered by the user is received, and it is determined that the resource amount corresponding to the second target resource level selected by the user is less than the target resource amount, a resource interaction processing is executed, and the resource interaction window is closed, and the interaction object panel is displayed on the live streaming room page, to facilitate the user to trigger the target interaction operation for the interaction object.

Based on the method embodiments described above, the present disclosure further provides a live streaming processing apparatus. Referring to FIG. 8, FIG. 8 is a schematic structural diagram of an apparatus for live streaming processing provided by an embodiment of the present disclosure, the apparatus includes:

A first display module 801, configured to display a resource interaction window on a live streaming room page in response to a target interaction operation triggered for a target interaction object on the live streaming room page and in accordance with a determination that a resource amount corresponding to the target interaction object is greater than a resource amount corresponding to a current account;

A second display module 802, configured to present an interaction effect resource corresponding to the target interaction object and displaying a first prompt information on the live streaming room page in response to a resource interaction success message triggered based on the resource interaction window and in accordance with a determination that an interaction resource amount corresponding to the resource interaction success message is not less than a target resource amount; where the target resource amount is determined based on the resource amount corresponding to the current account and the resource amount corresponding to the target interaction object, the first predetermined prompt information is configured to prompt that the target interaction operation for the target interaction object is successfully executed.

In an optional implementation, the apparatus further includes:

A third display module, configured to display an interaction object panel on the live streaming room page in response to the resource interaction success message triggered based on the resource interaction window and in accordance with the determination that the interaction resource amount corresponding to the resource interaction success message is less than the target resource amount, where the interaction object panel is configured to support triggering the target interaction operation for an interaction object.

In an optional implementation, target indication information is displayed on the resource interaction window. The second display module is specifically configured to:

present the interaction effect resource corresponding to the target interaction object and display the first predetermined prompt information on the live streaming room page in response to the resource interaction success message triggered based on the resource interaction window and in accordance with the determination that the interaction resource amount corresponding to the resource interaction success message is not less than the target resource amount and in accordance with a determination that the target indication information indicates an automatic execution of the target interaction operation after a successful interaction.

In an optional implementation, the apparatus further includes:
A fourth display module, configured to display an interaction object panel on the live streaming room page in response to the resource interaction success message triggered based on the resource interaction window and in accordance with the determination that the target indication information indicates that the target interaction operation will not be automatically executed after the successful interaction; where the interaction object panel is configured to support triggering the target interaction operation for an interaction object.

In an optional implementation, a plurality of resource levels is presented on the resource interaction window, and the apparatus further includes:
A fifth display module, configured to display, on the resource interaction window, a first target resource level that is selected in the plurality of resource levels by default; where a resource amount corresponding to the first target resource level is not less than the target resource amount;
A first determining module, configured to determine, in response to the resource interaction success message triggered based on the resource interaction window, the resource amount corresponding to the first target resource level as the interaction resource amount corresponding to the resource interaction success message.

In an optional implementation, a plurality of resource levels is presented on the resource interaction window, and the apparatus further includes:
A receiving module, configured to receive a selection operation for a second target resource level of the plurality of resource levels;
A second determining module, configured to determine, in response to the resource interaction success message triggered based on the resource interaction window, a resource amount corresponding to the second target resource level as the interaction resource amount corresponding to the resource interaction success message.

In an optional implementation, the apparatus further includes:
A sixth display module, configured to display, in accordance with the determination that a resource amount corresponding to the second target resource level is less than the target resource amount, a second predetermined prompt information on the resource interaction window, where the second predetermined prompt information is configured to prompt that the target interaction operation is unable to be executed automatically for the target interaction object.

In an optional implementation, the apparatus further includes:
A seventh display module, configured to close the resource interaction window and display an interaction object panel on the live streaming room page in response to a closing trigger operation for the resource interaction window; where the interaction object panel is configured to support triggering the target interaction operation for an interaction object.

In the apparatus for page interaction provided by the embodiments of the present disclosure, when a target interaction operation triggered for a target interaction object on the live streaming room page is received, whether a resource amount corresponding to the target interaction object is greater than a remaining resource amount of a current account is determined. If the resource amount corresponding to the target interaction object is greater than the remaining resource amount of the current account, a resource interaction window is displayed on the live streaming room page. In response to a resource interaction success message triggered based on the resource interaction window, whether an interaction resource amount corresponding to the resource interaction success message is less than a target resource amount is determined. If the interaction resource amount corresponding to the resource interaction success message is not less than the target resource amount, an interaction effect resource corresponding to the target interaction object is presented and a first predetermined prompt information is displayed on the live streaming room page, to prompt the user that the target interaction operation triggered for the target interaction object is successfully executed.

In the embodiments of the present disclosure, in the case where the target interaction operation triggered for the target interaction object on the live streaming room page is received and the remaining resource amount of the current account is insufficient, continuous execution of target interaction operations triggered for the target interaction object after a successful resource interaction is supported. The interaction path for an interaction object in the live streaming room is optimized, and the live streaming related functions are enriched, therefore improving the interaction experience of the user in the live streaming room.

In addition to the method and apparatus described above, an embodiment of the present disclosure further provides a computer-readable storage medium. The computer-readable storage medium has stored thereon instructions that, when executed on a terminal device, cause the terminal device to implement the method for page interaction of the embodiments of the present disclosure.

An embodiment of the present disclosure further provides a computer program product. The computer program product includes computer programs/instructions that, when executed by a processor, implement the method for page interaction of the embodiments of the present disclosure.

In addition, an embodiment of the present disclosure further provides a device for page interaction, as shown in FIG. 9, which may include:
A processor 901, a memory 902, an input device 903, and an output device 904. The number of processors 901 in the device for page interaction may be one or more, and one processor is used as an example in FIG. 9. In some embodiments of the present disclosure, the processor 901, the memory 902, the input device 903, and the output device 904 may be connected via a bus or in other manners, where connection via a bus is taken as an example in Figure 9.

The memory 902 may be configured to store software programs and modules. The processor 901 executes various functional applications and data processing of the device for page interaction by running software programs and modules stored in the memory 902. The memory 902 may mainly include a program storage area and a data storage area, where the storage program area may store an operating system, application programs required by at least one function, and the like. In addition, the memory 902 may include a high-speed random access memory, or may include a non-volatile memory, for example, at least one magnetic disk storage device, a flash memory device, or another volatile solid-state storage device. The input device 903 may be configured to receive inputted digit information or character information, and generate signal input related to user settings and function control of the device for page interaction.

Specifically, in this embodiment, the processor 901 loads the executable file corresponding to the process of one or more application programs into the memory 902 according to the following instruction, and runs the application program stored in the memory 902 by the processor 901, thereby implementing various functions of the above device for page interaction.

It should be noted that, relational terms herein such as "first" and "second" are merely used to distinguish one entity or operation from another entity or operation, and do not necessarily require or imply that any such actual relationship or order exists between these entities or operations. Moreover, the terms "comprise," "contain," or any other variation thereof are intended to cover a non-exclusive inclusion, such that a process, method, article, or device including a series of elements includes not only those elements, but also other elements not explicitly listed, or elements inherent to such a process, method, article, or device. Without further restriction, the elements defined by the statement "include one" do not exclude the presence of additional identical elements in the process, method, article, or device that includes the elements.

The above descriptions are only specific embodiments of the present disclosure, so that those skilled in the art can understand or implement the present disclosure. Various modifications to these embodiments will be apparent to those skilled in the art. The general principles defined herein may be implemented in other embodiments without departing from the spirit or scope of the present disclosure. Therefore, the present disclosure will not be limited to these embodiments described herein, but is to comply with the widest scope consistent with the principles and novel features disclosed herein.

## Claims

1. A method for page interaction, comprising:
displaying a resource interaction window on a live streaming room page in response to a target interaction operation triggered for a target interaction object on the live streaming room page and in accordance with a determination that a resource amount corresponding to the target interaction object is greater than a resource amount corresponding to a current account; and
presenting an interaction effect resource corresponding to the target interaction object and displaying a first predetermined prompt information on the live streaming room page in response to a resource interaction success message triggered based on the resource interaction window and in accordance with a determination that the interaction resource amount corresponding to the resource interaction success message is not less than the target resource amount, wherein the target resource amount is determined based on the resource amount corresponding to the current account and the resource amount corresponding to the target interaction object, the first predetermined prompt information is configured to prompt that the target interaction operation triggered for the target interaction object is successfully executed.

2. The method of claim 1, wherein the method further comprises:
displaying an interaction object panel on the live streaming room page in response to the resource interaction success message triggered based on the resource interaction window and in accordance with the determination that the interaction resource amount corresponding to the resource interaction success message is less than the target resource amount, wherein the interaction object panel is configured to support triggering the target interaction operation for an interaction object.

3. The method of claim 1, wherein target indication information is displayed on the resource interaction window, and presenting the interaction effect resource corresponding to the target interaction object and displaying the first predetermined prompt information on the live streaming room page in response to the resource interaction success message triggered based on the resource interaction window and in accordance with the determination that the interaction resource amount corresponding to the resource interaction success message is not less than the target resource amount comprises:
presenting the interaction effect resource corresponding to the target interaction object and displaying the first predetermined prompt information on the live streaming room page in response to the resource interaction success message triggered based on the resource interaction window and in accordance with the determination that the interaction resource amount corresponding to the resource interaction success message is not less than the target resource amount and in accordance with a determination that the target indication information indicates an automatic execution of the target interaction operation after a successful interaction.

4. The method of claim 3, wherein the method further comprises:
displaying an interaction object panel on the live streaming room page in response the resource interaction success message triggered based on the resource interaction window and in accordance with the determination that the target indication information indicates that the target interaction operation will not be automatically executed after the successful interaction; wherein the interaction object panel is configured to support triggering the target interaction operation for an interaction object.

5. The method of claim 1, wherein a plurality of resource levels is presented on the resource interaction window, the method further comprises: after displaying the resource interaction window on the live streaming room page,
displaying, on the resource interaction window, a first target resource level that is selected in the plurality of resource levels by default; wherein a resource amount corresponding to the first target resource level is not less than the target resource amount;
determining, in response to the resource interaction success message triggered based on the resource interaction window, the resource amount corresponding to the first target resource level as the interaction resource amount corresponding to the resource interaction success message.

6. The method of claim 1, wherein a plurality of resource levels is presented on the resource interaction window, the method further comprises: after displaying the resource interaction window on the live streaming room page,
receiving a selection operation for a second target resource level of the plurality of resource levels;
determining, in response to the resource interaction success message triggered based on the resource interaction window, a resource amount corresponding to the second target resource level as the interaction resource amount corresponding to the resource interaction success message.

7. The method of claim 6, wherein the method further comprises: after receiving the selection operation for the second target resource level of the plurality of resource levels,
displaying, in accordance with a determination that the resource amount corresponding to the second target resource level is less than the target resource amount, a second predetermined prompt information on the resource interaction window, wherein the second predetermined prompt information is configured to prompt that the target interaction operation is unable to be executed automatically for the target interaction object.

8. The method of claim 1, wherein the method further comprises: after displaying the resource interaction window on the live streaming room page,
closing the resource interaction window and displaying an interaction object panel on the live streaming room page in response to a closing trigger operation for the resource interaction window; wherein the interaction object panel is configured to support triggering the target interaction operation for an interaction object.

9. An apparatus for page interaction, comprising:
a first display module, configured to display a resource interaction window on a live streaming room page in response to a target interaction operation triggered for a target interaction object on the live streaming room page and in accordance with a determination that a resource amount corresponding to the target interaction object is greater than a resource amount corresponding to a current account; and
a second display module, configured to present an interaction effect resource corresponding to the target interaction object and displaying a first predetermined prompt information on the live streaming room page in response to a resource interaction success message triggered based on the resource interaction window and in accordance with a determination that the interaction resource amount corresponding to the resource interaction success message is not less than the target resource amount; wherein the target resource amount is determined based on the resource amount corresponding to the current account and the resource amount corresponding to the target interaction object, the first predetermined prompt information is configured to prompt that the target interaction operation for the target interaction object is successfully executed.

10. A computer-readable storage medium having stored thereon instructions that, when executed on a terminal device, cause the terminal device to implement the method of any of claims 1-8.

11. A device for page interaction, comprising: a memory, a processor, and a computer program stored on the memory and executable on the processor, wherein the computer program, when executed by the processor, implements the method of any of claims 1-8.
